# EUROPEAN PATENT SPECIFICATION

(11) **EP 3 521 499 B1**
(45) Date of publication and mention of the grant of the patent: **07.10.2026**
(21) Application number: 19160725.8
(22) Date of filing: 10.04.2013
(51) Int. Cl.: D06F 34/32, F21K 9/60, F21K 9/61

(54) **CONTROL PANEL ASSEMBLY**
BEDIENFELDANORDNUNG
ENSEMBLE DE PANNEAU DE COMMANDE

(30) Priority: 12.04.2012 KR 20120037716
(43) Date of publication of application: 07.08.2019
(62) Document number(s) of the earlier application(s) in accordance with Art. 76 EPC: 13163015.4 / 2 650 422
(73) Proprietor: Samsung Electronics Co., Ltd., Suwon-si, Gyeonggi-do 443-742 (KR)
(72) Inventor: PARK, Jong Won, Seognam-si, Gyeonggi-do (KR)
(74) Representative: Grünecker Patent- und Rechtsanwälte PartG mbB

(56) References cited:
- EP-A1- 2 031 112
- CN-Y- 201 245 779
- US-A1- 2003 112 160

## Description

### BACKGROUND

### 1. Field

Embodiments of the present disclosure relate to a control panel assembly for controlling an operation of a washing machine.

### 2. Description of the Related Art

A washing machine as a machine that washes clothes using power, generally includes a tub in which washing water is stored, a drum rotatably installed in the tub, and a driving motor for rotating the drum. When the drum is rotated in a state in which laundry and detergent water are put into the drum, laundry is in friction with the drum and detergent water so that dirt can be removed from laundry.

In general, the washing machine includes a control panel assembly disposed at an upper part of a front side of a main body that constitutes the exterior so as to control an operation of the washing machine.

As disclosed in Korean Patent Publication No. 10-2008-0103643, the control panel assembly includes a circuit board on which electric components, such as a rotary switch and a light emitting diode (LED), are installed, a control panel that covers the circuit board so as to protect a substrate, a rotary knob rotatably disposed on the control panel for user manipulation, and a display panel disposed on the periphery of the rotary knob. Light emitted from the LED is transmitted forward through the display panel via guide components inside the control panel.

However, in the control panel assembly, light emitted from the LED may be diffused into a different position from a predetermined position of the display panel, or intensity of the light emitted from the LED is not uniform according to a position of the display panel.

In order to solve these problems, a film is disposed between the LED and the display panel so as to remove diffusion of light or so as to uniformly diffuse light. However, due to an increase in cost required for manufacturing the film and an increase in assembling time required for attaching the film to the control panel assembly, productivity is lowered.

CN201245779Y discloses an LED bracket that forms a first light guide hole and a second light guide hole, wherein a cross-sectional area of the second light guide hole increases gradually in the direction of the emitted light in such a manner that its cross-sectional area becomes bigger at the exit as compared to the cross-sectional area of the first light guide hole which is formed around an LED.

EP2031112A1 discloses an optical diffusion portion having a lattice structure for scattering light emitted from an LED.

### SUMMARY

Therefore, it is an aspect of the present disclosure to provide a control panel assembly having an improved structure in which light emitted from a light emitting diode (LED) may be uniformly diffused.

Additional aspects of the disclosure will be set forth in part in the description which follows and, in part, will be apparent from the description, or may be learned by practice of the disclosure.

In accordance with one aspect of the present disclosure, there is provided a control panel assembly with the features of claim 1. Advantageous embodiments are disclosed by the subclaims.

A cross-sectional area of each second light guide hole may be smaller than a cross-sectional area of each first light guide hole.

The cross-sectional area of the light guide hole may be provided in a polygonal form.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a perspective view illustrating the exterior of a washing machine according to an embodiment of the present disclosure;
FIG. 2 is an exploded perspective view illustrating a structure of a control panel assembly of the washing machine illustrated in FIG. 1, according to an embodiment of the present disclosure;
FIG. 3 is a cross-sectional view illustrating a combined state of the control panel assembly illustrated in FIG. 2;
FIG. 4 is an enlarged cross-sectional view of a portion A of FIG. 3;
FIG. 5 is a cross-sectional view of a light emitting diode (LED) bracket;
FIG. 6 is an enlarged view of a portion B of FIG. 5; and
FIGS. 7A through 7C illustrate an operation of assembling the control panel assembly of FIG. 2 of the washing machine of FIG. 1, according to an embodiment of the present disclosure.

### DETAILED DESCRIPTION

Reference will now be made in detail to the embodiments of the present disclosure, examples of which are illustrated in the accompanying drawings, wherein like reference numerals refer to like elements throughout.

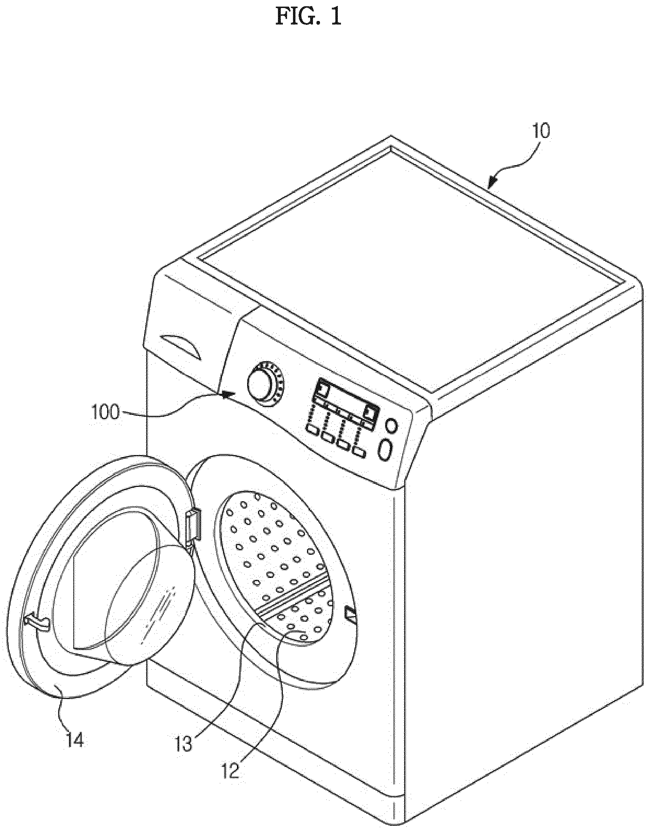

FIG. 1 is a perspective view illustrating the exterior of a washing machine according to an embodiment of the present disclosure.

As illustrated in FIG. 1, the washing machine includes a main body 10 that constitutes the exterior, a tub (not shown) which is installed in the main body 10 and in which washing water is stored, and a drum 12 that is rotatably disposed in the tub so as to wash laundry. A laundry port 13 through which laundry may be put into the drum 12, is formed at a front side of the main body 10, and a door 14 is installed to open/close the laundry port 13. A control panel assembly 100 is disposed at an upper part of the front side of the main body 10 so that a user may control an operation of the washing machine.

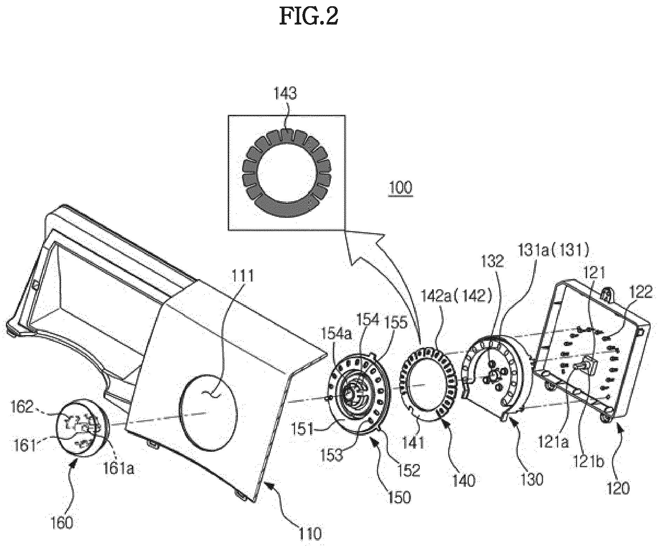

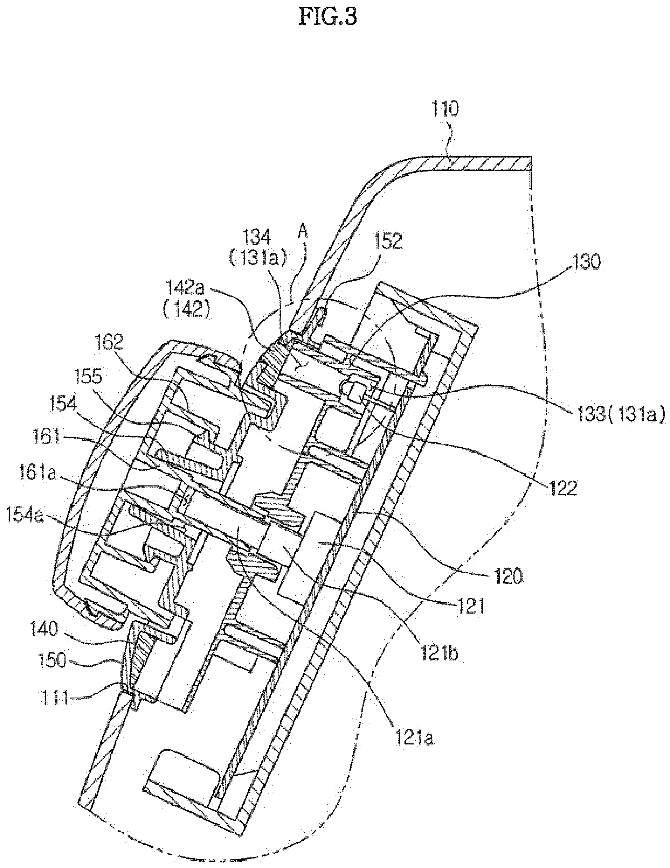

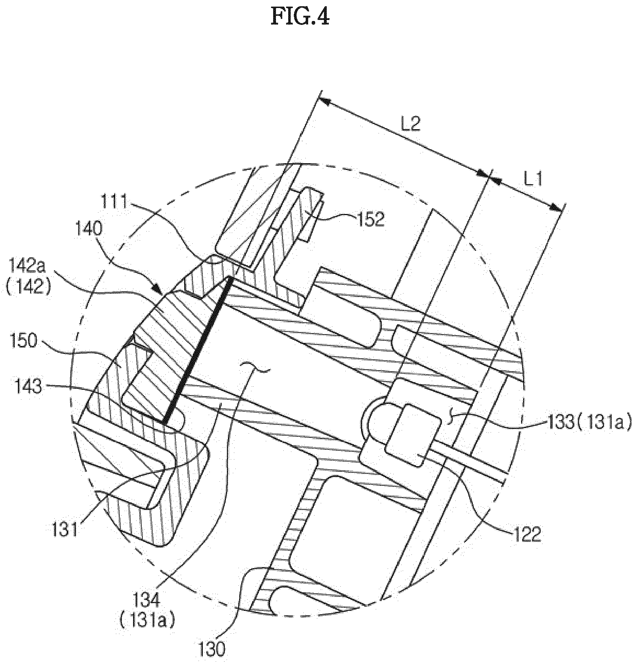

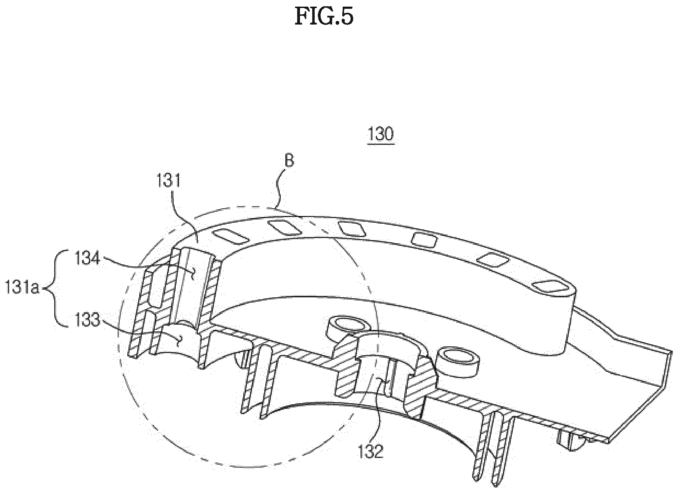

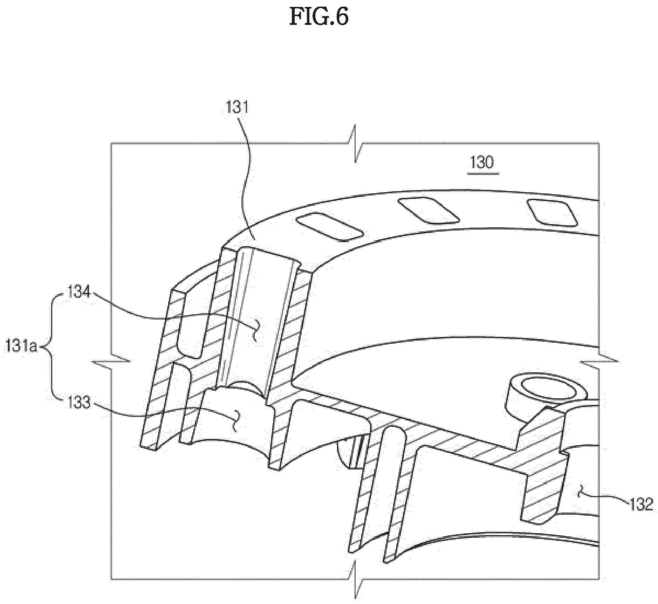

FIG. 2 is an exploded perspective view illustrating a structure of the control panel assembly 100 of the washing machine illustrated in FIG. 1, according to an embodiment of the present disclosure, FIG. 3 is a cross-sectional view illustrating a combined state of the control panel assembly 100 illustrated in FIG. 2, FIG. 4 is an enlarged cross-sectional view of a portion A of FIG. 3, FIG. 5 is a cross-sectional view of a light emitting diode (LED) bracket, and FIG. 6 is an enlarged view of a portion B of FIG. 5.

As illustrated in FIGS. 2 through 6, the control panel assembly 100 includes a control panel 110 having one side in which an opening 111 is formed and a circuit board 120 mounted at an inner side of the control panel 110.

A rotary switch 121 is installed at the circuit board 120, and a plurality of LEDs 122 are installed on the periphery of the rotary switch 121. The rotary switch 121 includes a push shaft 121a that protrudes forward and a rotation shaft 121b that surrounds a lower side of the push shaft 121a. A rotary knob 160 is combined with the rotary switch 121. The user may rotate the rotation shaft 121b of the rotary switch 121 via the rotary knob 160 or may press the push shaft 121a to select various operations of the washing machine, such as a washing course, a washing time, and the like.

Also, an LED bracket 130 is installed at the circuit board 120. The LED bracket 130 includes a light guide part 131 that accommodates and protects the plurality of LEDs 122 and simultaneously guides light emitted from the LEDs 122 toward the front of the control panel 110.

A first through hole 132 through which the rotation shaft 121b and the push shaft 121a of the rotary switch 121 pass, is formed in the center of the LED bracket 130.

The light guide part 131 includes a plurality of light guide holes 131a that are formed on the periphery of the first through hole 132 and are spaced apart from each other by a predetermined gap in a circumferential direction of the LED bracket 130.

As shown in FIG. 3, the plurality of light guide holes 131a include first light guide holes 133 in which the LEDs 122 are accommodated and second light guide holes 134 formed to have a step height with respect to the first light guide holes 133. The first light guide holes 133 and the second light guide holes 134 are formed in an approximately rectangular form so as to prevent light emitted from the LEDs 122 from being diffused. That is, the first light guide holes 133 and the second light guide holes 134 are provided in the rectangular form. Thus, when light emitted from the LEDs 122 passes through the light guide holes 131a, the light is guided toward one light transmission protrusion 142a disposed in a position corresponding to the light guide holes 131a on a path of light emitted from the LEDs 122 and proceeds, thereby preventing light from being diffused to other light transmission protrusions that do not correspond to the light guide holes 131a. Furthermore, since the second light guide holes 134 are formed to have a step height with respect to the first light guide holes 133 and the cross-sectional area of each second light guide hole 134 is smaller than that of each first light guide hole 133, there is the effect of focusing light emitted from the LEDs 122.

The cross-sectional area of the first light guide hole 133 gradually decreases and the cross-sectional area of the second light guide hole 134 gradually increases along the proceeding path of light emitted from the LEDs 122, so as to easily remove a mold for forming the first light guide holes 133 and the second light guide holes 134 when the LED bracket 130 is injection molded using plastic.

The shape of the first light guide holes 133 and the second light guide holes 134 is not limited to the rectangular shape and may be all polygonal shapes in which diffusion of light emitted from the LEDs 122 may be prevented.

Also, each second light guide hole 134 is relatively longer than each first light guide hole 133, so as to allow light emitted from the LEDs 122 to be further focused when light emitted from the LEDs 122 proceeds forward along the second light guide holes 134.

The degree to which light emitted from the LEDs 122 is focused is determined by a ratio (L2/L1) of a length L2 of the second light guide hole 134 to a length L1 of the first light guide hole 133. The ratio (L2/L1) of the length L2 of the second light guide hole 134 to the length L1 of the first light guide hole 133 may be approximately equal to or greater than 1.5 and equal to or less than 5. The reason why the ratio (L2/L1) of the length L2 of the second light guide hole 134 to the length L1 of the first light guide hole 133 has a predetermined range is that, as the length L2 of the second light guide hole 134 increases, the effect of focusing light emitted from the LEDs 122 increases but the thickness of the LED bracket 130 in which the second light guide holes 134 are formed increases. Of course, the ratio (L2/L1) of the length L2 of the second light guide hole 134 to the length L1 of the first light guide hole 133 is not limited to being equal to or greater than 1.5 and equal to or less than 5 and may be equal to or less than 1.5 or equal to or greater than 5 according to design specifications.

In this way, the cross-sectional areas or lengths of the light guide holes 131a is properly adjusted so that light emitted from the LEDs 122 reaches a desired position with a desired degree of focusing.

An LED window 140 and a knob guide 150 are installed at the opening 111 of the control panel 110, and the rotary knob 160 is combined with the front of a knob guide 150. The knob guide 150 supports the rotary knob 160 and prevents movement of the rotary knob 160. The LED window 140 serves to display a function selected through a rotation or pressing operation of the rotary knob 160, so that the user may identify the function.

The LED window 140 includes a ring-shaped base plate 141 coupled to a rear side of the knob guide 150, a light transmission part 142 formed in a circumferential direction of the ring-shaped base plate 141, and a light diffusion part 143 formed at a rear side of the base plate 141 corresponding to the front side of the LED bracket 130.

The light transmission part 142 includes a plurality of light transmission protrusions 142a that are spaced apart from each other by a predetermined gap in the circumferential direction of the ring-shaped base plate 141 and protrude from the front side of the base plate 141 so that light passing through the light guide holes 131a of the LED bracket 130 may be transmitted to the front of the control panel 110.

The light diffusion part 143 is configured in many uneven forms formed in units of approximately several micrometers to several hundreds of micrometers at the rear side of the base plate 141. The uneven forms may be formed by performing corrosion treatment on the rear side of the base plate 141 or by mechanical processing and may be pre-formed on a mold for injection-molding the LED window 140.

Also, instead of forming protrusions in the uneven forms at the rear side of the base plate 141, the light diffusion part 143 may be provided by attaching a thin material, such as a film, of which surface treatment for diffusing light is performed, to the front side or rear side of the base plate 141 of the LED window 140 or by inserting the thin material, such as the film, when the LED window 140 is injection molded.

The light diffusion part 143 allows light emitted from the LEDs 122 and passing through the LED bracket 130 to be uniformly diffused into one light transmission protrusion 142a and to be transmitted by the light transmission protrusions 142a, thereby generating the effect of appealing lighting.

According to one embodiment of the invention, the LED bracket 130 and the LED window 140 may be formed integrally with each other using a manufacturing method, such as injection molding. In this case, since it is not easy to additionally form uneven protrusions at the rear side of the base plate 141, the thin material, such as the film, of which surface treatment for diffusing light is performed, may be inserted when the LED bracket 130 and the LED window 140 are integrally injection molded.

The knob guide 150 includes a base panel 151 on which the rotary knob 160 is mounted, hanging jaws 152 that protrude from a circumference of the base panel 151, and a plurality of second through holes 153 that are spaced apart from each other by a predetermined gap in the circumferential direction of the base panel 151. A character or symbol is printed on the circumference of the base panel 151 so that the user may identify an operation selected by the rotary knob 160. The hanging jaws 152 are hung on the periphery of the opening 111 when the knob guide 150 is installed at the control panel 110. The plurality of second through holes 153 are formed through the base panel 151 in a position corresponding to the light transmission protrusions 142a so that the plurality of light transmission protrusions 142a are inserted into the plurality of second through holes 153 and are exposed to the front side of the control panel 110.

Also, the knob guide 150 includes a boss insertion part 154 that protrudes from the center of the knob guide 150 and at least one first hook 155 disposed on a circumference of the boss insertion part 154. The boss insertion part 154 includes a boss insertion hole 154a through which a boss 161 of the rotary knob 160 is inserted into the boss insertion part 154. The boss insertion part 154 confines the boss 161 of the rotary knob 160 so as to prevent movement of the rotary knob 160. The first hook 155 allows a second hook 162 of the rotary knob 160 to be engaged with the first hook 155 so that the rotary knob 160 is rotatably mounted on the knob guide 150. Also, the first hook 155 prevents the rotary knob 160 from being deviated when the user pulls the rotary knob 160.

The rotary knob 160 includes a boss 161 that extends from an inner side of the rotary knob 160 toward the center of the knob guide 150 to a predetermined length, and at least one second hook 162 disposed on a circumference of the boss 161. The boss 161 is inserted into the boss insertion part 154 when the rotary knob 160 is mounted on the knob guide 150, and a shaft insertion hole 161a is formed in the boss 161 so that the push shaft 121a of the rotary switch 121 may be inserted into the shaft insertion hole 161a. As described above, the second hook 162 is coupled to the first hook 155 so that the rotary knob 160 may be rotatably mounted on the knob guide 150.

In FIG. 2, three first hooks 155 and three second hooks 162 are disposed in the circumferential direction of the knob guide 150 and in the circumferential direction of the rotary knob 160, respectively. However, the number of first hooks 155 and second hooks 162 may be changed according to design requirements.

Also, in FIG. 3, the first hook 155 and the second hook 162 are engaged with each other so that the rotary knob 160 may be coupled to the knob guide 150. However, a hook may be formed at either of the rotary knob 160 and the knob guide 150, and a coupling hole to be coupled to the hook is formed at the other one of the rotary knob 160 and the knob guide 150 so that the rotary knob 160 and the knob guide 150 are coupled to each other.

Hereinafter, an operation of assembling the control panel assembly 100 of the washing machine according to the present disclosure will be described.

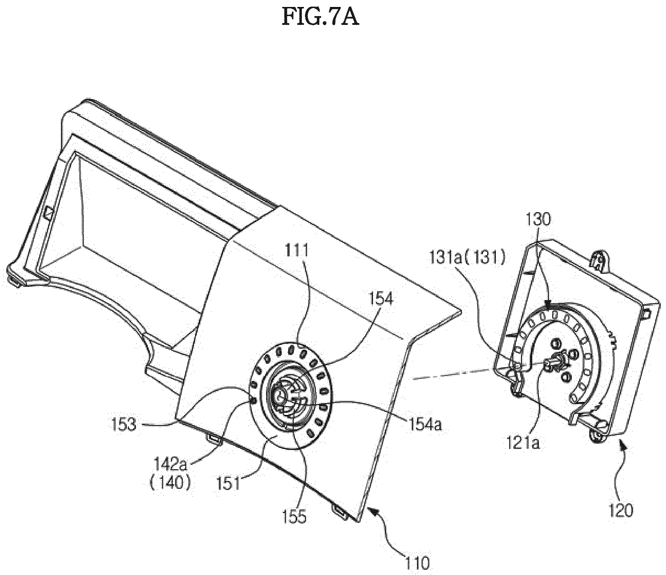

FIGS. 7A through 7C illustrate an operation of assembling the control panel assembly 100 of FIG. 2 of the washing machine of FIG. 1, according to an embodiment of the present disclosure.

First, as illustrated in FIG. 7A, when the knob guide 150 is inserted into the opening 111 of the control panel 110 at the rear of the control panel 110 in a state in which the LED window 140 is coupled to the knob guide 150, the base panel 151 and the light transmission part 142 are exposed to the front of the control panel 110 through the opening 111. The LED bracket 130 is combined with the circuit board 120 so as to accommodate and protect the rotary switch 121 and the LEDs 122 installed at the circuit board 120. In this case, the push shaft 121a and the rotation shaft 121b of the rotary switch 121 protrude forward through the first through hole 132.

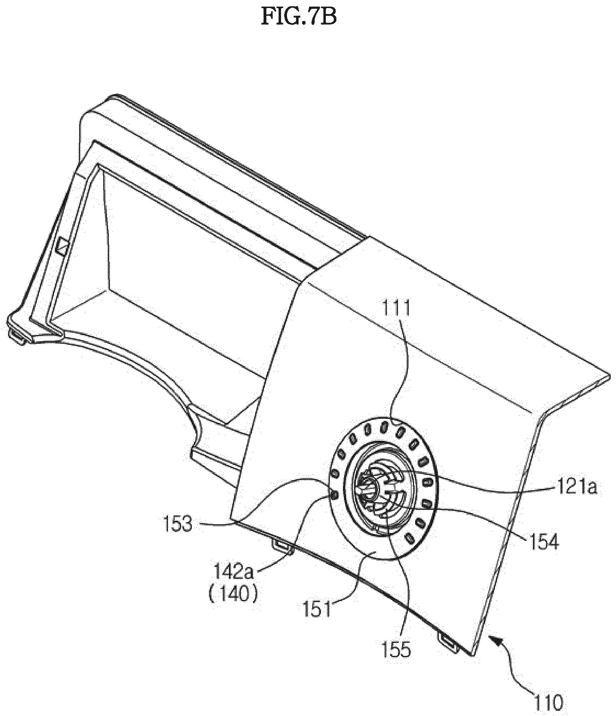

Next, as illustrated in FIG. 7B, the circuit board 120 is fixed to the control panel 110 on which the knob guide 150 is installed, using a fastening member, such as a screw. Then, the push shaft 121a and the rotation shaft 121b of the rotary switch 121 are exposed to the front of the control panel 110 via the boss insertion part 154 of the knob guide 150.

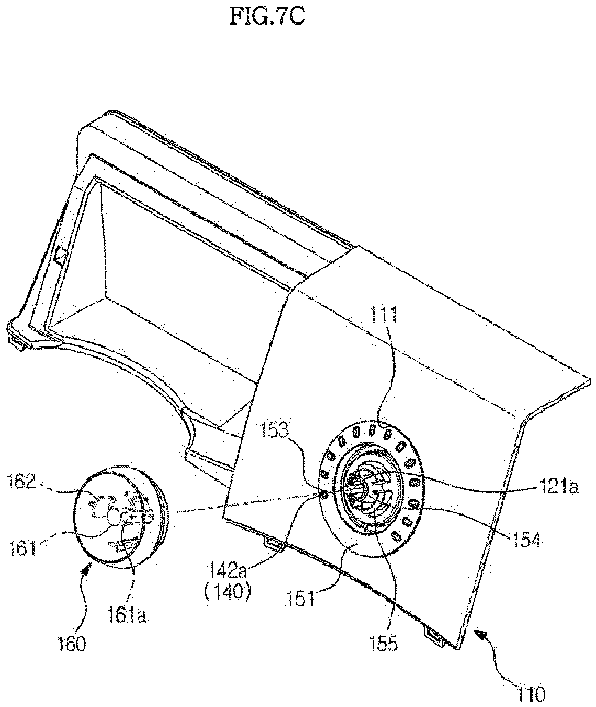

Subsequently, as illustrated in FIG. 7C, the rotary knob 160 is combined with the knob guide 150 at the front of the control panel 110. In this case, the boss 161 of the rotary knob 160 is inserted into the boss insertion part 154, and the second hook 162 of the rotary knob 160 is engaged with the first hook 155 of the knob guide 150. When the boss 161 of the rotary knob 160 is inserted into the boss insertion part 154, the push shaft 121a of the rotary switch 121 is inserted into the shaft insertion hole 161a formed in the boss 161 and is coupled to the boss 161.

It is apparent that the above-described control panel assembly 100 may be applied to not only a washing machine but also all electronic products that require operation control with user manipulation, such as a drying machine, a dishwasher, and the like.

As described above, according to the embodiments of the present disclosure, since light emitted from a plurality of LEDs is uniformly diffused, the effect of appealing lighting can be achieved and good impression can be given to the user so that the reliability of a product can be improved.

In addition, no additional component, such as a film, is required so that the productivity of the product can be improved.

Although a few embodiments of the present disclosure have been shown and described, it would be appreciated by those skilled in the art that changes may be made in these embodiments without departing from the principles of the invention, the scope of which is defined in the claims.

## Claims

1. A control panel assembly (100) for controlling operation of a washing machine, comprising:
a control panel (110);
a circuit board (120) disposed at an inner side of the control panel (110);
a plurality of light emitting diodes (LEDs) (122) disposed on the circuit board (120) and configured to emit light; and
an LED bracket (130) configured to accommodate the plurality of LEDs (122), the LED bracket (130) being coupled to the circuit board (120) and being configured to guide light from the plurality of LEDs (122) to the front of the control panel (110), wherein the LED bracket (130) includes a plurality of light guide holes (131a, 133, 134), of which a cross-sectional area is not uniform in at least a portion thereof in a direction in which the light emitted from the LEDs (122) is guided, and
an LED window (140) disposed at a front side of the LED bracket (130) and configured to allow light emitted from the plurality of LEDs (122) to be transmitted to the front of the control panel (110),
wherein each of the plurality of light guide holes (131a, 133, 134) comprises
a first light guide hole (133) configured to accommodate one of the plurality of LEDs (122), and
a second light guide hole (134),
**characterized in that**
the second light guide holes (134) are formed to have a step height with respect to the first light guide holes (133) and a cross-sectional area of each second light guide hole (134) is smaller than a cross-sectional area of each first light guide hole (133).

2. The control panel assembly according to claim 1, wherein a cross-sectional area of the first light guide hole (133) is decreased gradually in a light proceeding direction and a cross-sectional area of the second light guide hole (134) is gradually increased in the light proceeding direction, wherein a smallest cross-sectional area of each of the first and second light guide holes (131a) is formed where the first light guide hole (133) and the second light guide hole (134) meet, and wherein each second light guide hole (134) is relatively longer than each first light guide hole (133).

3. The control panel assembly according to claim 1,
wherein the LED window (140) comprises
a light transmission part (142) configured to allow the light emitted from the plurality of LEDs (122) to be transmitted to the front of the control panel (110); and
a light diffusion part (143) configured to allow the light emitted from the plurality of LEDs (122) to be uniformly diffused when passing through the light transmission part (142), and
the light diffusion part (143) comprises uneven forms formed at a rear side of the LED window (140) corresponding to the front side of the LED bracket (130).

4. The control panel assembly according to claim 1,
wherein the LED window (140) comprises
a light transmission part (142) configured to allow the light emitted from the plurality of LEDs (122) to be transmitted to the front of the control panel (110); and
a light diffusion part (143) configured to allow the light emitted from the plurality of LEDs (122) to be uniformly diffused when passing through the light transmission part (142), and
the light diffusion part (143) comprises a film member attached to or inserted into the LED window (140).

5. The control panel assembly according to claim 3 or **4,** wherein the light transmission part (142) comprises a plurality of light transmission protrusions (142a) disposed in positions corresponding to the plurality of light guide holes (131a, 133, 134) on a path of the light emitted from the plurality of LEDs (122), and
the plurality of light guide holes (131a, 133, 134) are provided in a polygonal form so as to prevent the light emitted from the plurality of LEDs (122) from being diffused into other light transmission protrusions (142a) than the light transmission protrusions corresponding to the light guide holes (131a, 133, 134).

6. The control panel assembly according to claim 1, wherein the cross-section of the light guide holes (131a, 133, 134) has a polygonal form.

7. The control panel assembly according to claim 3 or **4,** further comprising:
a knob guide (150) disposed at a front side of the LED window (140); and
a rotary knob (160) rotatably mounted on the knob guide (150),
wherein the plurality of light guide holes (131a, 133, 134) are spaced apart from each other by a predetermined gap in a ring form based on a rotation shaft of the rotary knob (160).

8. The control panel assembly according to claims 5 and 7, wherein the knob guide (150) comprises a plurality of through holes (153) formed in positions corresponding to the plurality of light transmission protrusions (142a) so that the plurality of light transmission protrusions (142a) are inserted into the plurality of through holes (153) and are exposed to a front side of the control panel (110).

## Patentansprüche

1. Bedienfeldbaugruppe (100) zur Steuerung des Betriebs einer Waschmaschine, umfassend:
ein Bedienfeld (110);
eine auf der Innenseite des Bedienfelds (110) angeordnete Leiterplatte (120);
eine Vielzahl von Leuchtdioden (LEDs) (122), die auf der Leiterplatte (120) angeordnet und so ausgelegt sind, dass sie Licht ausstrahlen; sowie
eine LED-Halterung (130), die so ausgelegt ist, dass sie die mehreren LEDs (122) aufnimmt, wobei die LED-Halterung (130) mit der Leiterplatte (120) verbunden ist und so ausgelegt ist, dass sie Licht von den mehreren LEDs (122) zur Vorderseite des Bedienfelds (110) leitet, wobei die LED-Halterung (130) mehrere Lichtleitlöcher (131a, 133, 134) aufweist, deren Querschnittsfläche zumindest in einem Teilbereich in einer Richtung, in der das von den LEDs (122) emittierte Licht geleitet wird, nicht einheitlich ist, sowie
ein LED-Fenster (140), das an einer Vorderseite der LED-Halterung (130) angeordnet und so ausgelegt ist, dass es das von der Vielzahl von LEDs (122) zur Vorderseite des Bedienfelds (110) durchgelassen werden kann,
wobei jede der mehreren Lichtleitöffnungen (131a, 133, 134) Folgendes umfasst:
eine erste Lichtleitöffnung (133), die so ausgebildet ist, dass sie eine der mehreren LEDs (122) aufnimmt, und
eine zweite Lichtleitöffnung (134),
**dadurch gekennzeichnet, dass**
die zweiten Lichtleiteröffnungen (134) so ausgebildet sind, dass sie gegenüber den ersten Lichtleiteröffnungen (133) eine Stufenhöhe aufweisen, und dass die Querschnittsfläche jeder zweiten Lichtleiteröffnung (134) kleiner ist als die Querschnittsfläche jeder ersten Lichtleiteröffnung (133).

2. Bedienfeldbaugruppe nach Anspruch 1, wobei sich die Querschnittsfläche des ersten Lichtleiterlochs (133) in Lichtausbreitungsrichtung allmählich verringert und die Querschnittsfläche der zweiten Lichtleitöffnung (134) in der Lichtausbreitungsrichtung allmählich vergrößert, wobei eine kleinste Querschnittsfläche jeder der ersten und zweiten Lichtleitöffnungen (131a) an der Stelle ausgebildet ist, an der die erste Lichtleitöffnung (133) und die zweite Lichtleitöffnung (134) aufeinandertreffen, und wobei jede zweite Lichtleitöffnung (134) relativ länger ist als jede erste Lichtleitöffnung (133) ist.

3. Die Bedienfeldbaugruppe nach Anspruch 1,
wobei das LED-Fenster (140) Folgendes umfasst:
einen Lichtdurchlassabschnitt (142), der so ausgebildet ist, dass das von den mehreren LEDs (122) emittierte Licht zur Vorderseite des Bedienfelds (110) hindurchgelassen wird; sowie einen Lichtstreuabschnitt (143), der so ausgebildet ist, dass das von der Vielzahl von LEDs (122) emittierte Licht beim Durchgang durch den Lichtdurchlassabschnitt (142) gleichmäßig gestreut wird, und
wobei der Lichtstreuabschnitt (143) ungleichmäßige Formen aufweist, die an einer Rückseite des LED-Fensters (140) entsprechend der Vorderseite der LED-Halterung (130) ausgebildet sind.

4. Bedienfeldbaugruppe nach Anspruch 1,
wobei das LED-Fenster (140) umfasst:
einen Lichtdurchlassabschnitt (142), der so ausgebildet ist, dass das von den mehreren LEDs (122) emittierte Licht zur Vorderseite des Bedienfelds (110) durchgelassen wird; sowie einen Lichtstreuabschnitt (143), der so ausgebildet ist, dass das von den mehreren LEDs (122) emittierte Licht beim Durchgang durch den Lichtdurchlassabschnitt (142) gleichmäßig gestreut wird, und
wobei der Lichtstreuabschnitt (143) ein Folienelement umfasst, das an dem LED-Fenster (140) angebracht oder in dieses eingesetzt ist.

5. Bedienfeldbaugruppe nach Anspruch 3 oder 4, wobei der Lichtdurchlassabschnitt (142) eine Vielzahl von Lichtdurchlassvorsprüngen (142a) umfasst, die an Positionen angeordnet sind, die der Vielzahl von Lichtleiterlöchern (131a, 133, 134) auf einem Weg des von den mehreren LEDs (122) emittierten Lichts angeordnet sind, und
die mehreren Lichtleitlöcher (131a, 133, 134) in einer polygonalen Form ausgebildet sind, um zu verhindern, dass das von den mehreren LEDs (122) emittierte Licht in andere lichtdurchlässige Vorsprünge (142a) als die den Lichtleitlöchern (131a, 133, 134) entsprechenden lichtdurchlässigen Vorsprünge gestreut wird.

6. Bedienfeldbaugruppe nach Anspruch 1, wobei der Querschnitt der Lichtleiteröffnungen (131a, 133, 134) eine polygonale Form aufweist.

7. Bedienfeldbaugruppe nach Anspruch 3 oder 4, ferner umfassend:
eine Knopfführung (150), die an einer Vorderseite des LED-Fensters (140) angeordnet ist; und
einen Drehknopf (160), der drehbar an der Knopfführung (150) gelagert ist,
wobei die mehreren Lichtleiterlöcher (131a, 133, 134) in Ringform um die Drehachse des Drehknopfs (160) herum in einem vorbestimmten Abstand voneinander angeordnet sind.

8. Die Bedienfeldbaugruppe nach Anspruch 5 und 7, wobei die Knopfführung (150) eine Vielzahl von Durchgangsbohrungen (153) aufweist, die an Positionen ausgebildet sind, die der Vielzahl von Lichtdurchlassvorsprüngen (142a) entsprechen, so dass die Vielzahl von Lichtdurchlassvorsprüngen (142a) in die Vielzahl von Durchgangsbohrungen (153) eingeführt ist und zur Vorderseite des Bedienfelds (110) hin freiliegt.

## Revendications

1. Ensemble de panneau de contrôle (100) destiné à contrôler le fonctionnement d'un lave-linge, comprenant :
un panneau de contrôle (110) ;
un circuit imprimé (120) disposé sur un côté interne du panneau de contrôle (110) ;
une pluralité de diodes électroluminescentes, DEL (122), disposées sur le circuit imprimé (120) et configurées pour émettre de la lumière ;
un support de DEL (130) configuré pour recevoir la pluralité de DEL (122), le support de DEL (130) étant couplé au circuit imprimé (120) et configuré pour guider la lumière provenant de la pluralité de DEL (122) jusqu'à l'avant du panneau de contrôle (110), dans lequel le support de DEL (130) inclut une pluralité de trous de guidage de lumière (131a, 133, 134), dont au moins une portion de la superficie en section transversale n'est pas uniforme dans la direction où est guidée la lumière émise par les DEL (122) ; et
une fenêtre de DEL (140) disposée sur un côté avant du support de DEL (130) et configurée pour permettre la transmission de la lumière émise par la pluralité de DEL (122) jusqu'à l'avant du panneau de contrôle (110),
dans lequel chaque trou de la pluralité de trous de guidage de lumière (131a, 133, 134) comprend
un premier trou de guidage de lumière (133) configuré pour recevoir une DEL de la pluralité de DEL (122), et
un deuxième trou de guidage de lumière (134),
**caractérisé en ce que**
les deuxièmes trous de guidage de lumière (134) sont formés pour avoir une hauteur étagée par rapport aux premiers trous de guidage de lumière (133), et la superficie en section transversale de chaque deuxième trou de guidage de lumière (134) est inférieure à la superficie en section transversale de chaque premier trou de guidage de lumière (133).

2. Ensemble de panneau de contrôle selon la revendication 1, dans lequel la superficie en section transversale du premier trou de guidage de lumière (133) diminue graduellement dans la direction de propagation de la lumière et la superficie en section transversale du deuxième trou de guidage de lumière (134) augmente graduellement dans la direction de propagation de la lumière, dans lequel la plus petite superficie en section transversale de chacun des premier et deuxième trous de guidage de lumière (131a) est formée là où le premier trou de guidage de lumière (133) et le deuxième trou de guidage de lumière (134) se rejoignent, et dans lequel chaque deuxième trou de guidage de lumière (134) est relativement plus long que chaque premier trou de guidage de lumière (133).

3. Ensemble de panneau de contrôle selon la revendication 1, dans lequel
la fenêtre de DEL (140) comprend :
une partie de transmission de lumière (142) configurée pour permettre la transmission de la lumière émise par la pluralité de DEL (122) jusqu'à l'avant du panneau de contrôle (110) ; et
une partie de diffusion de lumière (143) configurée pour permettre la diffusion uniforme de la lumière émise par la pluralité de DEL (122) lors de son passage à travers la partie de transmission de lumière (142), et
la partie de diffusion de lumière (143) comprend des formes irrégulières sur un côté arrière de la fenêtre de DEL (140) correspondant au côté avant du support de DEL (130).

4. Ensemble de panneau de contrôle selon la revendication 1, dans lequel
la fenêtre de DEL (140) comprend
une partie de transmission de lumière (142) configurée pour permettre la transmission de la lumière émise par la pluralité de DEL (122) jusqu'à l'avant du panneau de contrôle (110) ; et
une partie de diffusion de lumière (143) configurée pour permettre la diffusion uniforme de la lumière émise par la pluralité de DEL (122) lors de son passage à travers la partie de transmission de lumière (142), et
la partie de diffusion de lumière (143) comprend un élément de film attaché à la fenêtre de DEL (140) ou inséré dans celle-ci.

5. Ensemble de panneau de contrôle selon la revendication 3 ou 4, dans lequel
la partie de transmission de lumière (142) comprend une pluralité de protubérances de transmission de lumière (142a) disposées à des positions correspondant à la pluralité de trous de guidage de lumière (131a, 133, 134) sur le trajet de la lumière émise par la pluralité de DEL (122), et
les trous de la pluralité de trous de guidage de lumière (131a, 133, 134) présentent une forme polygonale afin d'empêcher la diffusion de la lumière émise par la pluralité de DEL (122) dans d'autres protubérances de transmission de lumière (142a) que les protubérances de transmission de lumière correspondant aux trous de guidage de lumière (131a, 133, 134).

6. Ensemble de panneau de contrôle selon la revendication 1, dans lequel la section transversale des trous de guidage de lumière (131a, 133, 134) présente une forme polygonale.

7. Ensemble de panneau de contrôle selon la revendication 3 ou 4, comprenant en outre :
un guide de bouton (150) disposé sur le côté avant de la fenêtre de DEL (140) ; et
un bouton rotatif (160) monté de manière rotative sur le guide de bouton (150),
dans lequel les trous de la pluralité de trous de guidage de lumière (131a, 133, 134) sont espacés les uns des autres d'un intervalle prédéterminé selon une forme annulaire par rapport à l'axe de rotation du bouton rotatif (160).

8. Ensemble de panneau de contrôle selon les revendications 5 et 7, dans lequel le guide de bouton (150) comprend une pluralité de trous traversants (153) formés à des positions correspondant à la pluralité de protubérances de transmission de lumière (142a) de sorte que les protubérances de la pluralité de protubérances de transmission de lumière (142a) sont insérées dans la pluralité de trous traversants (153) et sont exposées sur un côté avant du panneau de contrôle (110).
